(19) Europäisches Patentamt

European Patent Office

Office européen des brevets

(11) **EP 1 026 769 A2**

(12) **EUROPÄISCHE PATENTANMELDUNG**

(43) Veröffentlichungstag:
 **09.08.2000 Patentblatt 2000/32**

(51) Int. Cl.$^7$: **H01M 10/50**, H02J 7/00

(21) Anmeldenummer: **00101484.4**

(22) Anmeldetag: **26.01.2000**

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(30) Priorität: **03.02.1999 DE 19904181**

(71) Anmelder:
 **NOKIA MOBILE PHONES LTD.**
 **02150 Espoo (FI)**

(72) Erfinder: **Bläcker, Bernhard**
 **44801 Bochum (DE)**

(74) Vertreter: **Stendel, Klaus**
 **Nokia Technology GmbH,**
 **Abt. NH/P,**
 **Östliche Karl-Friedrich-Strasse 132**
 **75175 Pforzheim (DE)**

(54) **Vorrichtung zum Reaktivieren einer elektrischen Batterie**

(57) Die Erfindung betrifft eine Vorrichtung zum Reaktivieren einer elektrischen Batterie (B), welche in Folge von Unterkühlung bei Frost an einen angeschlossenen Verbraucher nicht mehr den benötigten Mindestwert an elektrische Leistung abgeben kann. Es ist die Aufgabe der Erfindung, eine Lösung zu schaffen, die mit einem vertretbaren Aufwand an Zeit und Energie nach dem Einfluss extrem tiefer Temperaturen auf die Batterie eine möglichst schnelle Inbetriebnahme des Verbrauchers ermöglicht bzw. diesen im betriebsfähigen Zustand hält. Gemäß der Erfindung erfolgt das Reaktivieren der Batterie durch ein inneres Erwärmen des Elektrolyten, welches mit Hilfe eines zeitlich kontrollierten Eigenstroms über die Batteriekontakte realisiert wird, bei dem in der äußeren Schaltung eine zu vernachlässigende geringe elektrische Wirkleistung umgesetzt wird. Dazu wird der hohe Innenwiderstand bei Unterkühlung ausgenutzt und dieser als internes Heizelement betrieben. Vorteilhaft wird mit den Batteriekontakten (+, -) eine Blindlast (X) mit mindestens einem induktiven und/oder kapazitiven Element verbunden. Eine Steuerschaltung (CC) schaltet während des Reaktivierens die Blindlast (X) über mindestens einem Schalter (S1, S2, S3, S4) derart periodisch, dass ein alternierender Blindstrom ($I_L$) die Batterie (B) durchfließt.

**FIG. 3**

**Beschreibung**

Die Erfindung betrifft eine Vorrichtung zum Reaktivieren einer elektrischen Batterie, welche in Folge von Unterkühlung bei Frost an einen angeschlossenen Verbraucher nicht mehr den benötigten Mindestwert an elektrische Leistung abgeben kann. Der Begriff "Batterie" wird im vorliegenden Fall als Oberbegriff für einen elektro-chemischen Energiespeicher verwendet mit einer beliebigen Anzahl von galvanischen Primär- oder regenerierbaren Sekundärzellen.

Ein Vorteil der vorliegenden Erfindung besteht darin, dass diese unabhängig von der Zellenart, der Zellengröße und der Bauform der Batterie anwendbar ist. Besonders vorteilhaft ist die Erfindung für Batterien geeignet, welche für die Stromversorgung von mobilen Geräten wie Funktelefonen oder Funkgeräten dienen, da bereits nach wenigen Minuten das Gerät wieder betrieben werden kann. Dieses ermöglicht beispielsweise bei einem Funktelefon das Ausführen eines Notrufs in Gefahrensituationen auch unter dem Einfluss extremer Kälte, wie sie beim Aufenthalt in Polargebieten oder alpinen Regionen auftreten. Im vorliegenden Fall wird der Begriff "Funktelefon" als Oberbegriff für jede Art von Geräten für eine drahtlose Kommunikation benutzt, insbesondere für Mobiltelefone, Autotelefone, Satellitentelefone, mobile Faxgeräte und mobile Computer, die mit einem Netz kommunizieren können.

Ein bekannter Nachteil von Batterien jeglicher Art besteht darin, dass die elektrochemische Reaktion in ihrem Inneren und damit die maximale Leistung, die entnommen werden kann, grundsätzlich sehr stark von der Innentemperatur der Batterie abhängt. Bei sinkender Temperatur nimmt die Geschwindigkeit der chemischen Reaktion an den Elektroden ab. Damit sinkt bei konstanter Leerlaufspannung der maximale elektrische Strom, den die Batterie abgeben kann, und damit die Batterieleistung. Außerdem sinkt die Geschwindigkeit des Stofftransports innerhalb des Elektrolyten sowie innerhalb der porösen Batterieelektroden. Beide Faktoren erhöhen den Innenwiderstand der kalten Batterie erheblich. Das heißt, selbst eine voll geladene Batterie kann im unterkühlten Zustand der Zellen infolge ihres hohen Innenwiderstandes nicht ihre volle elektrische Nennleistung erbringen. Die Nennleistung kann jedoch ohne Zufuhr von Ladeenergie wieder entnommen werden, sobald sich das Batterieinnere auf Normaltemperatur erwärmt hat.

Die Temperaturabhängigkeit ist unter anderem dann besonders nachteilig, wenn die Batterie beispielsweise einen Gleichspannungswandler speisen soll, dem auf der Sekundärseite unabhängig von der Höhe der Spannung an den Batteriekontakten eine bestimmte elektrische Leistung entnommen wird. Bei einem Funktelefon wird beispielsweise im Sendebetrieb für die Senderendstufe eine elektrische Leistung von einigen Watt benötigt. Infolge des hohen Innenwiderstandes ist die Spannung an den Batteriekontakten gering und die Regelung des Wandlers bewirkt ein Erhöhen der Stromaufnahme, um die benötigte Leistung aufzubringen. Dieses hat wiederum eine weitere Reduktion der Spannung an den Kontakten zur Folge. Da der Wandler nicht ausreichend Leistung erhält, setzt seine Regelung aus und gerät in einen unkontrollierten Betriebszustand, der einer vollständigen Entladung der Batterie entspricht.

Wenn beispielsweise der Wandler für ein Funktelefon genutzt wird, erkennt seine Steuerung diesen Betriebszustand wie eine entladene Batterie und schaltet zum Schutz vor Tiefstentladung das Funktelefon in den Stand-by-Zustand. Obwohl die Batterie noch ausreichend Ladung aufweist, ist es in diesem Zustand unmöglich, eine Verbindung zum Netz aufzubauen. Diese Situation stellt für die Notruffunktion eines Funktelefons ein erhebliches Sicherheitsrisiko dar.

Es ist bekannt, beispielsweise Starterbatterien für Kraftfahrzeuge durch eine zusätzliche Umhüllung aus thermisch gut isolierendem Material möglichst lange Zeit vor dem Unterkühlen zu schützen. Eine solche Umhüllung wird von verschiedenen Händlern für Autozubehör angeboten. Dieses erfordert jedoch einerseits ein hohes zusätzliches Volumen und zeigt andererseits nur eine zeitlich begrenzte Wirkung. Insbesondere für ein Funktelefon ist die Lösung unbefriedigend, weil eine zusätzliche Umhüllung das Volumen des Telefons unerwünscht erhöht.

Um diese Wirkung zu verlängern, sind beispielsweise im Handel für Autozubehör elektronisch gesteuerte Heizplatten zu finden. Diese werden auf die Gehäuseoberfläche von Starterbatterien geklebt und weisen elektrische Anschlüsse auf welche mit den Batteriekontakten zu verbinden sind. Eine solche Heizplatte soll ein Auskühlen der Batterie mit Hilfe ihrer eigenen Energie verhindern, so dass deren Innentemperatur in einem Bereich bleibt, bei dem der Innenwiderstand so gering ist, dass jederzeit die gewünschte Leistung entnommen werden kann. Aus Gründen der elektrischen Isolation, sind jedoch die Zellen einer Batterie in einem Material gehüllt, das gleichzeitig ein guter Wärmeisolator ist. Damit liegt zwischen dem Batterieinneren und der Heizplatte ein hoher Wärmewiderstand und die Batterieumgebung wird mit einem beachtlichen Aufwand an elektrischer Energie warm gehalten, um ein Absinken der Innentemperatur zu vermeiden. Infolge des hohen Wärmewiderstandes ist es jedoch nicht möglich, eine unterkühlte Batterie mit vertretbarem Aufwand an Zeit- und Energie zu reaktivieren. Folglich gibt die Heizplatte bei tiefen Temperaturen ständig eine wesentlich höhere Energiemenge an die Umgebung ab, als im Innern benötigt wird. Dieses kann die Kapazität der Batterie überfordern. Es besteht die Gefahr, dass zum Halten der normalen Temperatur bereits soviel Leistung entnommen wird, dass der Aufbau einer Verbindung wegen entladener Batterie nicht mehr möglich ist.

Aus einschlägigen Sicherheitsbestimmungen zum sicheren Umgang mit Batterien, wie beispielsweise den IEC-Empfehlungen, ist ausserdem bekannt, dass ein äußerer Kurzschluss der Anschlüsse einer Batterie strikt zu vermeiden ist. Wie den Internet-Seiten: "Grundsätzliches zum Thema Batterien, Zusatzfragen für Fortgeschrittene, "http//www.varta. de/knowhow/100quest/100-003.html 7", der Firma Varta zu entnehmen ist, kann ein äußerer Kurzschluss gravierende Folgen haben, wenn sich dabei im Innern der Batterie ein hoher Gasdruck aufbaut.

Zum schonenden Laden der Batterie eines Funktelefons ist bekannt, in der Batterie zwischen der isolierenden Aussenhaut und dem metallischen Zellenkörper einen Temperaturfühler anzuordnen. Mit diesem Fühler bestimmt die Steuerschaltung des Funktelefons infolge des metallischen Kontaktes mit einer relativ geringen Verzögerung die Batterietemperatur und unterbricht damit das Laden, wenn sich die Batterie dabei auf einen bestimmten Wert erwärmt hat. Diese Maßnahme dient zum Schutz vor einem Überladen.

Auf dem Gebiet der Fernsehtechnik, vergleiche beispielsweise Philips-Lehrbriefe: Elektrotechnik und Elektronik, Band 2, Technik und Anwendung, 8., stark überarbeitete Auflage, Abschnitt: „Horizontale Ablenkstufen", Seiten 231ff, Heidelberg: Hüthig, ist ein einfaches Funktionsprinzip zum Erzeugen eines sägezahnförmigen Wechselstroms zur Horizontalablenkung aus einer Gleichspannungsquelle, wie einer Batterie, bekannt. Dabei liegt an der Gleichspannungsquelle im Prinzip eine Induktivität in Serie mit einem Schalter, welcher mit einer Diode überbrückt ist und im Wechsel leitet und sperrt. Parallel zur Induktivität liegt eine Kapazität. Bei entsprechender Wahl der Werte für die Bauelemente im Verhältnis zu den Schaltzeiten des Schalters geschieht folgendes:

Ein Strom aus der Batterie baut in der Induktivität während der Leitzeit des Schalters ein Magnetfeld auf. Dieses bricht nach dem Sperren des Schalters zusammen, der Strom kehrt seine Richtung um und die Energie aus der Batterie pendelt in Form einer Halbwelle einer Resonanzschwingung zwischen Induktivität und Kapazität und zurück. Die Spannungsamplitude ist während dieser Halbwelle noch positiv. Die darauf folgende negative Halbwelle öffnet die Diode und die Energie aus der Batterie fließt bei idealen, also verlustfreien Bauelementen zurück in die Batterie. Dieser Vorgang wird deshalb auch als „Energierückgewinnung bezeichnet.

Ausgehend von den Mängeln der bekannten Lösungen zum Reaktivieren einer Batterie ist es die Aufgabe der Erfindung, eine Lösung von einem Funktelefon zu schaffen, die mit einem vertretbaren Aufwand an Zeit und Energie nach dem Einfluss extrem tiefer Temperaturen auf die Batterie eine möglichst schnelle Inbetriebnahme des Funktelefons ermöglicht bzw. das Telefon im betriebsfähigen Zustand hält.

Gemäß der Erfindung erfolgt das Reaktivieren der Batterie durch ein inneres Erwärmen des Elektrolyten, welches mit Hilfe eines zeitlich kontrollierten Eigenstroms über die Batteriekontakte realisiert wird, bei dem in der äußeren Schaltung eine zu vernachlässigende geringe elektrische Wirkleistung umgesetzt wird. Dazu wird der hohe Innenwiderstand bei Unterkühlung ausgenutzt und dieser als internes Heizelement betrieben. Die der Batterie dabei entzogene elektrische Energie wird direkt im Batterieinnern in Wärme umgesetzt. Als Folge erwärmt sich die innere Struktur der Batterie gegenüber den bekannten Lösungen wesentlich schneller bei minimalen Energieverlusten zur Umgebung. Bereits kurze Zeit nach dem Beginn des Reaktivierens verringert sich infolge des Ansteigens der Elektrolyttemperatur der Innenwiderstand. Deshalb kann eine Steuerschaltung diesen Vorgang intelligent überwachen und den Strom zum Reaktivieren entsprechend des jeweiligen Zustandes der Batterie optimal steuern.

Der Innenwiderstand bei einer unterkühlten Batterie ist relativ groß. Somit könnte diese, ohne Schaden zu nehmen, während des Reaktivierens an den Batteriekontakten dauernd mit einem Kurzschluss belastet werden. Diese vermeintlich einfache Lösung ist wegen der Sicherheitsbestimmungen weder zulässig noch für die Praxis geeignet, weil während des Kurzschlusses an den Batterieanschlüssen keine Spannung zum Betreiben einer Steuerschaltung bereitsteht, die den Vorgang bei eingetretener Erwärmung abbricht. Damit wäre eine zeitliche Kontrolle des Vorgangs ausgeschlossen.

Es ist deshalb eine weitere Aufgabe der Erfindung, eine Möglichkeit zum Erwärmen des Inneren der Batterie zu zeigen, ohne dass in der äußeren Schaltung dadurch nennenswerte Energieverluste entstehen, dass die Batteriekontakte eine Spannung zum Betreiben der Steuerschaltung bereitstellen.

Dieses wird gemäß der Erfindung dadurch erreicht, dass die äußere Schaltung die Batterie periodisch mit kurzzeitigen Stromspitzen in Höhe oder nahe des Kurzschlussstroms belastet. Das erfolgt im einfachsten Fall durch einen Schalter, der die Batterieanschlüsse im Rhythmus einer Pulsfrequenz überbrückt, welche vorteilhaft ein von der Innentemperatur abhängiges Tastverhältnis aufweist. Ausserhalb der Leitzeiten des Schalters lädt die Batterie einen Ladekondensator, um die Betriebsspannung für die Steuerschaltung bereitzustellen.

Untersuchungen haben jedoch gezeigt, dass sich ein Wechselstrom, der während des Reaktivierens über die Batteriekontakte fließt, den Vorgang beschleunigt. Nach einer ersten vorteilhaften Ausführungsform der Erfindung, ist deshalb die äußere Schaltung zum Belasten der Batterie so ausgeführt, dass die elektrische Energie aus der Batterie periodisch in beiden Richtungen, also als Wechselstrom, zwischen der Batterie und einem Energiespeicher in der äußeren Schaltung pendelt. Auch bei dieser Ausführung wird Wirkleistung im wesentlichen nur im Innern der Batterie in Wärme umgesetzt. Dafür enthält die äußere Schaltung eine Blindlast mit mindestens einem induktiven und/oder kapazitiven Element, deren Anschlüsse die Steuerschaltung über mindestens einen Schalter derart periodisch schaltet, dass die Blindlast im Wechsel geladen und entladen wird.

Nach einer weiteren vorteilhaften Ausführungsform der Erfindung nutzt die Steuerschaltung den Umstand, dass auch während einer zeitlich begrenzten Entnahme eines Stroms, die Amplitude der momentanen Batteriespannung direkt von der Innentemperatur abhängt. Dabei muss jedoch berücksichtigt werden, dass ein Messen der Batteriespannung an den Batteriekontakten unter Last keinen sicheren Aufschluss über die Innentemperatur der Batterie gibt. Eine weitgehend entleerte Batterie weist ebenso wie eine unterkühlte einen höheren Innenwiderstand auf und ist somit nicht von einer unterkühlten, aber noch vollen zu unterscheiden.

Gemäss der Erfindung unterscheidet jedoch die Steuerschaltung durch Auswerten der Spannung an den Batteriekontakten in Verbindung mit einem Signal, welches der eingangs erwähnte Temperaturfühler liefert, zuverlässig eine unterkühlte Batterie von einer mit geringer Ladung. Somit erhält die Steuerschaltung während des Reaktivierens ein zusätzliches Indiz zum Temperaturzustand der Batterie. Da dieses den Erfolg des Reaktivierens ohne zeitlichen Verzug anzeigt, wird das Reaktivieren beendet, sobald die Amplitude der Batteriespannung während der Stromspitzen einen Mindestwert überschreitet. Somit kann bei einer unterkühlten Batterie das Reaktivieren mit einer hohen Belastung begonnen werden, ohne dabei bleibende Schäden zu verursachen und gegen einschlägige Sicherheitsbestimmungen zu verstoßen. Sobald der Innenwiderstand fällt, kann die Belastung ohne zeitliche Verzögerung reduziert werden. Da dabei außerdem der zeitliche Verzug zwischen Energiezufuhr und der Erwärmung des Elektrolyten geringer ist als bei den bekannten Lösungen, sichert die Steuerschaltung, dass der Batterie tatsächlich nur so viel Energie entnommen wird, wie für die Inbetriebnahme eines Funktelefons notwendig ist.

Die Erfindung soll nachstehend an Ausführungsbeispielen erläutert werden. Die entsprechenden Zeichnungen zeigen:

FIG. 1    das Grundprinzip der Vorrichtung gemäß der Erfindung

FIG. 2    eine erste vorteilhafte Ausführungsform der Vorrichtung gemäß der Erfindung

FIG. 3    eine zweite vorteilhafte Ausführungsform der Vorrichtung gemäß der Erfindung

FIG. 4    den Strom $I_L$ = f(t) in der Blindlast der zweiten vorteilhaften Ausführungsform, abhängig von der Zeit t

FIG. 5    den von der Kontrollschaltung gesteuerten Strom $I_B$ = f(t) über die Batteriekontakte gemäß der zweiten vorteilhaften Ausführungsform zum direkten inneren Erwärmen des Elektrolyten der Batterie, abhängig von der Zeit t

FIG. 6    eine weitere Ausführungsform der Erfindung ohne Induktivität.

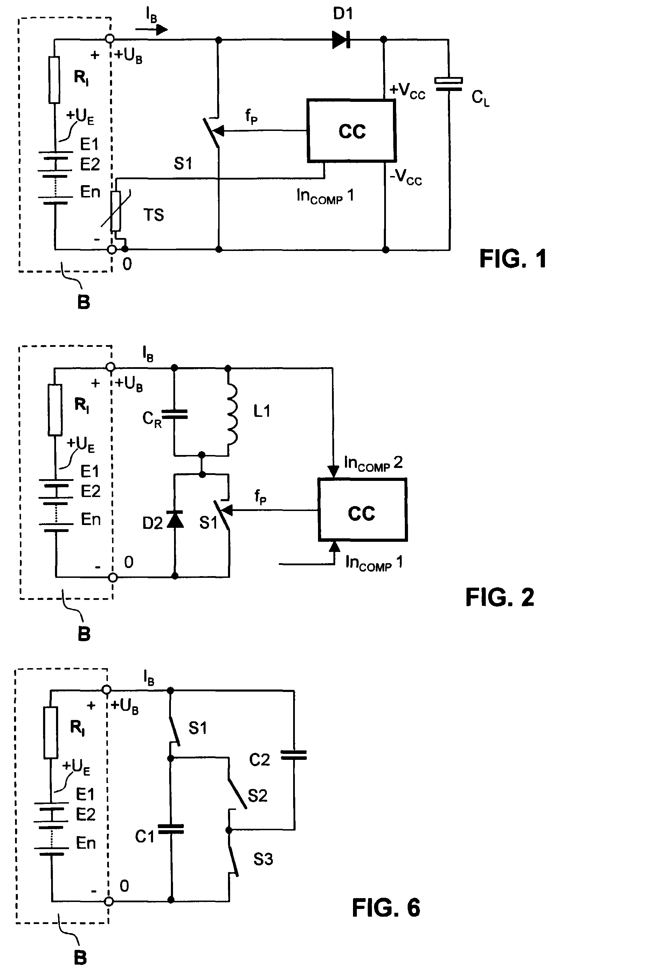

Die in FIG.1 gezeigte Vorrichtung enthält eine Batterie B, welche n galvanische Zellen E1, E2, En mit einer Gesamtzellenspannung $U_E$, einen Innenwiderstand $R_I$ und Batteriekontakte (+)und (-) enthält, an welchen der Batterie B eine Batteriespannung $U_B$ entnommen werden kann. Wie bei jeder Batterie, ist der Innenwiderstand $R_I$ von ihrer Innentemperatur abhängig und steigt bei starker Unterkühlung, beispielsweise bei einer Innentemperatur von -20°C oder tiefer, erheblich an. Eine Batterie für ein Funktelefon kann dabei beispielsweise einen Innenwiderstand $R_I$ von fünf Ohm und größer aufweisen, so dass die Batteriespannung $U_B$ an den Batteriekontakten (+)und (-) bei einer Stromentnahme in der Größenordnung von einem Ampere erheblich keiner als die Gesamtzellenspannung $U_E$ ist. Ein von der Batterie B versorgtes Funktelefon mit einem Spannungswandler würde unzureichend Leistung erhalten und, wie oben beschrieben, aussetzen; so, als wäre die Batterie B vollständig entladen. Dadurch wäre ein Betreiben des Funktelefons, z.B. zum Senden eines Notrufs nicht mehr möglich.

FIG. 1 zeigt gemäß dem Grundprinzip der Erfindung einen Schalter S1, der die Batterieanschlüsse (+), (-) im Rhythmus einer Pulsfrequenz $f_P$ überbrückt, welche eine Steuerschaltung CC erzeugt. Die Steuerschaltung CC verändert vorteilhaft abhängig von der Innentemperatur das Tastverhältnis der Pulsfrequenz $f_P$ Ausserhalb der Leitzeiten lädt die Batterie B einen Ladekondensator $C_L$, um Betriebsspannung für die Steuerschaltung CC bereitzustellen. Eine Diode D1 verhindert, dass sich der Ladekondensator $C_L$ während der Leitzeit des Schalters entlädt. Ein Komparator in der Steuerschaltung CC ist über einen ersten Komparatoreingang $In_{COMP}1$ mit dem eingangs beschriebenen Temperaturfühler TS verbunden, um eine unterkühlte Batterie von einer entladenen zu unterscheiden. Da die Batteriespannung $U_B$ während des periodischen Kurzschließens unabhängig von der Innentemperatur immer gegen Null strebt, ist ein Auswerten während der Leitzeit nicht möglich.

Das dargestellte Grundprinzip ist deshalb bezüglich einer zeitlichen Steuerung sehr kritisch. Sobald Anzeichen einer Erwärmung vorhanden sind, muss die Steuerschaltung CC das Verhältnis zwischen Sperr- und Leitzeit erhöhen, um Schäden an der Batterie zu vermeiden. Außerdem ist von Nachteil, dass zum Reaktivieren ein pulsierender Gleichstrom benutzt wird.

Bei den nachfolgenden Lösungen ist es immer sinnvoll, mit dem Temperaturfühler TS zumindest die Notwendigkeit eines Reaktivierens zu ermitteln. Ebenso benötigen solche Lösungen, welche Stromspitzen gleich oder nahe dem Kurzschlussstrom benutzen, einen Ladekondensator, um die Steuerschaltung CC betriebsfähig zu halten. Im Interesse der Übersicht wurde im folgenden auf das Darstellen und Beschreiben dieser Details verzichtet

Die nachfolgenden Lösungen belasten die Batterie B mit einem Wechselstrom. Dieses wirkt sich vorteilhaft auf das Tempo des Reaktivierens aus, welches offenbar auf eine bessere Verteilung der Energiezufuhr durch den Wechsel an den Elektroden zurück zu führen ist. Damit wird der Innenwiderstand $R_I$ vom Batteriestrom $I_B$ nacheinander zweimal durchflossen. Zum Ersten beim Umwandeln elektrischer Energie in magnetische und zum Zweiten bei der Umkehr dieser Energiewandlung.

FIG. 2 zeigt eine Lösung, die dem eingangs beschriebenen Funktionsprinzip zum Erzeugen eines sägezahnförmigen Wechselstroms für die Horizontalablenkung in einem Fernsehgerät entspricht. Dabei liegt an der Batterie eine Induktivität L1 in Serie mit einem Schalter S1, welcher mit einer Diode D2 überbrückt ist und im Wechsel einer Pulsfrequenz $f_P$ leitet und sperrt. Parallel zur Induktivität L1 liegt eine Kapazität $C_R$. Bei entsprechender Wahl der Werte von Induktivität L1 und Kapazität $C_R$ im Verhältnis zur Pulsfrequenz $f_P$ bzw. Tastverhältnis tritt der oben beschriebene Effekt zwischen Induktivität L1 und Kapazität $C_R$ ein, bei dem Energie aus der Batterie weitestgehend in die Batterie zurückfließt.

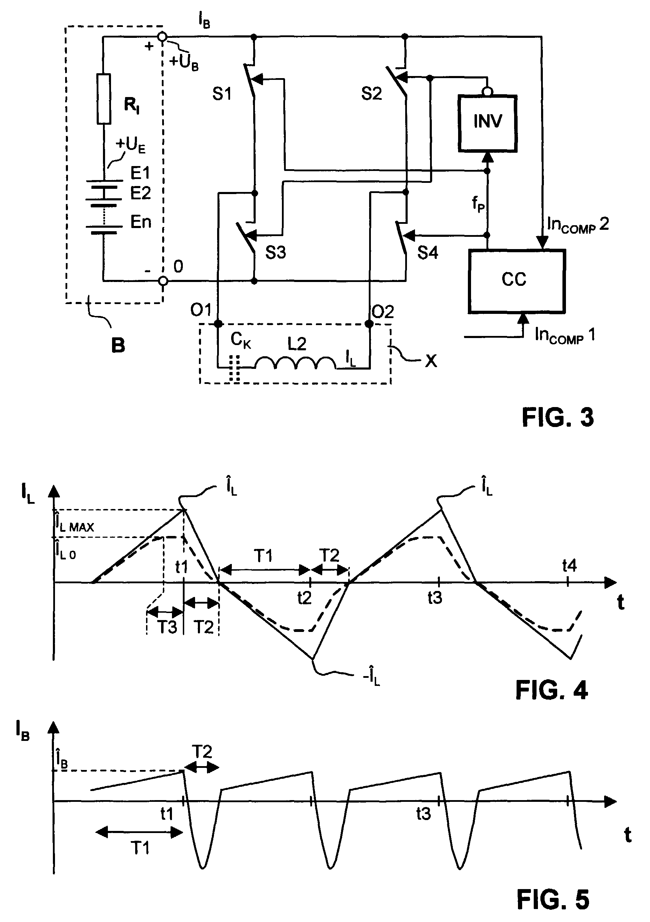

FIG. 3 zeigt eine weitere Lösung zum Erzeugen eines sägezahnförmigen Wechselstroms für das direkte innere Erwärmen der Batterie B. An den Batteriekontakten (+), (-) sind elektronisch steuerbare Schalter S1, S2, S3 und S4 angeschlossen, welche zu einer Gegentakt-Brückenschaltung angeordnet sind. Die Schalter S1, S2, S3, S4 können konventionelle Feldeffekttransistoren, bipolare Transistoren oder ähnliches sein. Im Brückenzweig zwischen den Gegentaktzweigen S1 und S3 bzw. S2 und S4 liegt eine Blindlast X, welche vorteilhaft eine Induktivität L2 ist.

Beim Erkennen einer unterkühlten Batterie schaltet die Steuerschaltung CC die Gegentakt-Brückenschaltung periodisch im Rhythmus der Pulsfrequenz $f_P$ um, so dass die Induktivität L2 alternierend mit Elektroenergie geladen und entladen wird. Die Steuerschaltung CC betätigt dabei die Schalter S1 und S4 direkt und die Schalter S2 und S3 über einen Inverter INV. Selbstverständlich können die Schalter S1 und S3 bzw. S2 und S4 jedes Gegentaktzweiges auch als Komplementär-Gegentaktendstufen ausgeführt werden. In diesem Fall werden alle Schalter S1 - S4 direkt von der Steuerschaltung CC angesteuert und der Inverter INV entfällt. Die Steuerschaltung CC erzeugt zum Betätigen der Schalter S1 - S4 vorteilhaft eine Rechteckspannung, beispielsweise mit einer Pulsfrequenz $f_P$ in der Größenordnung von etwa 100 kHz. Die Steuerschaltung CC ändert vorteilhaft die Pulsfrequenz $f_P$ und/oder das Tastverhältnis für die Schalter S1 bis S4 in Abhängigkeit von der Innentemperatur der Batterie, um die Intensität des Erwärmens den aktuellen Bedingungen unverzüglich anzupassen.

Die FIG. 4 zeigt den zeitlichen Verlauf des Blindstroms $I_L$ in der Blindlast X. Dieser steigt infolge der Induktivität L2 während der Dauer T1 annähernd linear an, wobei der Batteriestrom $I_B$ ein Magnetfeld in der Induktivität L2 aufbaut. Die Dauer T1 wird jeweils durch ein Umschalten der Schalter S1 - S4 zu den Zeitpunkten t1 - t4 beendet. Dabei verbinden die Schalter S1 - S4 die Anschlüsse O1 und O2 der Blindlast X jeweils mit dem entsprechend entgegengesetztem Batteriekontakt, womit ein Abbau des Magnetfeldes in der Induktivität L2 beginnt. Dieser Abbau endet nach der Dauer T2. Infolge des Umschaltens zum jeweilig anderen Batteriekontakt, beginnt nach dem Abbau ein entsprechender Verlauf des Blindstroms $I_L$ mit gleichen Zeiten T1 und T2 und gleicher Amplitude jedoch mit umgekehrter Richtung des Blindstroms $I_L$.

Der Batterie B wird dabei der in FIG. 5 gezeigte Batteriestrom $I_B$ entnommen. Während der Dauer T1 steigt der Batteriestrom $I_B$ linear. Nach dem Umschalten der Schalter S1 - S4 wird für die Dauer T2 die in der Induktivität L2 gespeicherte Energie abgebaut. Dabei verursacht eine induktive Gegenspannung einen kräftigen Stromstoß in entgegengesetzter Richtung, also in die Batterie B zurück, so dass diese der gewünschte Wechselstrom durchfließt. Da bei geeigneter Wahl der Schalter S1 - S4 und der Größe der Induktivität L die äußere Schaltung nur sehr geringe Wirkimpedanzen aufweist, wirkt die im Wechsel bewegte Energie zum größten Teil im Innenwiderstand $R_I$.

Um eine betriebsfähige Batterie B vor zu hoher Belastung durch Stromspitzen im Batteriestrom $I_B$ zu schützen, wird nach einem weiteren Merkmal der Erfindung vorteilhaft die Größe der Induktivität L im Verhältnis zur Pulsfrequenz $f_P$ so gewählt, dass die Stromspitzen $\hat{I}_L$, $-\hat{I}_L$ im Blindstrom $I_L$ nur einen maximalen Spitzenwert $\hat{I}_{L\,MAX}$ erreichen. Damit folgt der Blindstrom $I_L$ zumindest bei allen Batterien B, die auf Grund normaler Innentemperatur einen Innenwiderstand $R_I$ unterhalb eines bestimmten Wertes aufweisen, dem in FIG.2 gezeigten Verlauf der Kurve mit einer durchgehenden Linie, unabhängig von der tatsächlichen Höhe des Innenwiderstands $R_I$. Die Induktivität L2 begrenzt also damit den Spitzenwert des Batteriestroms $I_B$ auf einen Wert unterhalb des möglichen Kurzschlusswertes und bewirkt somit einen Schutz, da wegen des niedrigen Innenwiderstandes $R_I$ dieser Wert sehr hoch liegen kann.

Der maximale Spitzenwert $\hat{I}_{L\,MAX}$ kann nach einem weiteren Merkmal der Erfindung jedoch so hoch gelegt werden, dass bei einer unterkühlten Batterie der hohe Innenwiderstand $R_I$ den Spitzenwert $\hat{I}_{L\,O}$ des

Blindstroms $I_L$ auf einen Wert unterhalb des Wertes $\hat{I}_{L\,MAX}$ begrenzt. Bei einer solchen Batterie entspricht der Verlauf des Blindstroms $I_L$ der gestrichelten Kurve, wobei der Spitzenwert des Blindstroms $\hat{I}_{L\,O}$ dem Grad der Unterkühlung entspricht. In diesem Falle steht jeweils für die Dauer T3 periodisch der Kurzschlusswert der unterkühlten Batterie B als maximaler Spitzenstrom zur Verfügung. Das heisst, die Batteriespannung $U_B$ fällt jeweils während der Dauer T3 auf ein Minimum, nämlich der Restspannung am leitenden Schalter S1. Dieses Minimum erreicht eine betriebsfähige Batterie B jedoch nicht, weil die Induktivität L den möglichen Kurzschlusswert des Batteriestroms $I_B$ begrenzt.

Nach einem besonderen Ausführungsmerkmal der Erfindung, nutzt die Steuerschaltung CC vorteilhaft diese Abhängigkeit der Batteriespannung $+U_B$ von der Innentemperatur der Batterie B, um den erfolgreichen Abschluss zu erkennen. Ein einfacher Komparator in der Steuerschaltung CC stellt, im Beispiel über den Komparatoreingang $I_{COMP}2$, während des Reaktivierens ein Unterschreiten eines Referenzwertes durch den Minimalwert $U_{B\,MIN}$ fest und erkennt damit, dass dieses fortgesetzt werden kann. Liegt der Minimalwert $U_{B\,MIN}$ jedoch oberhalb des Referenzwertes, so weist die Batterie eine für die Betriebsfähigkeit geeignete Temperatur auf und das Reaktivieren wird beendet.

Um die Verluste an Wirkleistung in der äußeren Schaltung klein zu halten, werden für die Schalter S1, S2, S3, S4 vorteilhaft Halbleiterbauelemente verwendet, die im geschalteten Zustand geringe Spannungsabfälle aufweisen. Die Blindlast X enthält einen Koppelkondensator $C_K$. Dieser dient primär zum Verhindern eines Batteriegleichstroms $I_B$ während des Reaktivierens. Dieser würde entstehen, wenn die Steuerschaltung eine betriebsfähige Batterie erkennt und das Ansteuern der Gegentakt-Brückenschaltung einstellt. In diesem Fall ist eines der Schalterpaare S1/S4 oder S2/S3 dauernd leitend und über die ständige Verbindung zur Blindlast fließt ein Kurzschluss-Gleichstrom, der die Batterie zerstören kann. Eine Alternative zum Kondensator $C_K$ besteht im gleichzeitigen Abschalten aller Schalter S1 bis S4.

Die Schaltung nach FIG. 6 erzeugt beim Reaktivieren ebenfalls einen Wechselstrom $I_B$. In einem ersten Signalzustand der Pulsfrequenz $f_P$ sind die Schalter S1 und S3 geschlossen und der Schalter S2 offen. Aus der Batterie fließt ein Strom $I_B$, welcher die in diesem Signalzustand parallel liegenden Kapazitäten C1 und C2 lädt. Diese erreichen dabei eine Ladespannung $U_{C1}$, $U_{C2}$, die vorteilhaft nahe an der Gesamtzellenspannung $U_E$ liegen soll. Beim Wechsel des Signalzustandes der Pulsfrequenz $f_P$ öffnen die Schalter S1 und S3 und Schalter 2 schließt. Im Ergebnis dessen liegen die Kapazitäten C1 und C2 in Serie. Da sich dabei die Ladespannung $U_{C1}$, $U_{C2}$, addieren, ist die Summe größer als die Gesamtzellenspannung $U_E$ und bis zum Entladen fließt ein Ladestrom $-I_B$ in die Batterie.

Verwendet die in FIG. 3 gezeigte Schaltung als Blindlast X nur eine Kapazität C, so tritt die gewünschte Begrenzung der Stromspitzen nicht auf Statt dessen fließt nach dem Umschalten der Schalter S1 bis S4 durch den Innenwiderstand $R_I$ infolge der Addition der Spannung an der Kapazität C ein größerer Spitzenstrom $\hat{I}_B$. Da bei der Blindlast X ein pulsierenden Gleichstrom $I_B$ die Batterie durchfließt an Stelle eines Wechselstroms, ist diese Blindlast besonders für Batterien geeignet, die nicht wiederaufladbare Primärelemente enthalten.

Ein wesentlicher Vorteil der Erfindung besteht darin, dass die Vorrichtung zum Reaktivieren einer elektrischen Batterie B nur mit geringem Zusatzaufwand in das bekannte Management eines Funktelefons zur Überwachung oder Funktionsbereitschaft der Batterie B einbezogen werden kann. Ebenso, wie beim Funktelefon ständig der Ladezustand der Batterie kontrolliert wird, kann mit der Lösung gemäss der Erfindung in bestimmten Zeitabständen regelmäßig geprüft werden, ob infolge von niedrigen Umgebungstemperaturen eine Reaktivierung erforderlich ist.

**Patentansprüche**

1. Vorrichtung zum Reaktivieren einer elektrischen Batterie (B), welche in Folge von Frosteinwirkung auf das Batterieinnere über Batteriekontakte (+, -) an einem angeschlossenen Verbraucher nicht den benötigten Mindestwert an elektrischer Leistung abgeben kann, mit einer elektronischen Steuerschaltung (CC), welche zum Erwärmen des Batterieinneren durch eigenen Batteriestrom ($I_B$) mit den Batteriekontakten (+, -) verbunden ist, **dadurch gekennzeichnet,** dass die elektronische Steuerschaltung (CC) über die Batteriekontakte (+, -) einen zeitlich kontrollierten Batteriestrom ($I_B$) realisiert, welcher eine direkte innere Erwärmung des Elektrolyten bewirkt, bei der trotz einer Bereitstellung von Batteriespannung ($U_B$) in der äußeren Schaltung minimal elektrische Wirkleistung umgesetzt wird.

2. Vorrichtung nach Anspruch 1, dadurch gekennzeichnet, dass die äußere Schaltung mindestens einem Schalter (S1) enthält, den die Steuerschaltung (CC) während des Reaktivierens derart periodisch schaltet, dass ein pulsierender Batteriestrom ($I_B$) die Batterie (B) durchfließt und dass während des Sperrens eine Kapazität ($C_L$) Batteriespannung ($U_B$) speichern kann.

3. Vorrichtung nach Anspruch 1, dadurch gekennzeichnet, dass die äußere Schaltung eine Blindlast (X) mit mindestens einem induktiven und/oder kapazitiven Element enthält, deren Anschlüsse (O1, O2) die Steuerschaltung (CC) während des Reaktivierens über mindestens einem Schalter (S1, S2, S3, S4) derart periodisch schaltet, dass ein alternierender Blindstrom ($I_L$) die Batterie (B) durchfließt.

4. Vorrichtung nach Anspruch 3, dadurch gekennzeichnet, dass die Blindlast (X) eine Induktivität (L1) mit einer parallel liegenden Resonanzkapazität ($C_P$) ist, welche ein in Serie liegender Schalter (S1) periodisch an die Batteriekontakte (+, -) schaltet, wobei parallel zum Schalter eine Diode (D2) liegt, welche sich zur Batteriespannung ($+U_B$) in Sperrrichtung befindet.

5. Vorrichtung nach Anspruch 3, dadurch gekennzeichnet, dass elektronische Schalter (S1, S2, S3 und S4) eine Gegentakt-Brückenschaltung bilden, welche die Anschlüsse der Blindlast (X) im Wechsel kreuzweise mit den Batteriekontakten (+, -) verbindet, so dass diese ein sägezahnförmiger Wechselstrom ($I_L$) durchfließt, dessen Stromspitzen zumindest dann unterhalb des Kurzschlussstroms der Batterie (B) liegen, wenn diese nicht unterkühlt ist.

6. Vorrichtung nach Anspruch 5, dadurch gekennzeichnet, dass die Blindlast (X) eine Induktivität (L2) ist.

7. Vorrichtung nach einem der Ansprüche 4 und 6, dadurch gekennzeichnet, dass zum Schutz einer betriebsfähigen Batterie (B) vor einer zu hohen Belastung durch Stromspitzen ($\hat{I}_L$, $-\hat{I}_L$) die Größe der Induktivität (L1 bzw. L2) im Verhältnis zur Pulsfrequenz ($f_P$) und/oder Tastverhältnis so gewählt ist, dass die Stromspitzen ($\hat{I}_L$, $-\hat{I}_L$) zumindest bei einer nicht unterkühlten Batterie (B) unterhalb des Kurzschlussstroms der Batterie (B) liegen.

8. Vorrichtung nach einem der Ansprüche 4 und 6, dadurch gekennzeichnet, dass die Größe der Induktivität (L1 bzw. L2) im Verhältnis zur Pulsfrequenz ($f_P$) und/oder Tastverhältnis so gewählt ist, dass eine unterkühlte Batterie mit Stromspitzen ($\hat{I}_L$, $-\hat{I}_L$) in Höhe oder nahe des Kurzschlussstroms belastet wird

9. Vorrichtung nach einem der vorstehenden Ansprüche, dadurch gekennzeichnet, dass die elektronische Steuerschaltung (CC) abhängig von der Temperatur der Batterie (B) die Pulsfrequenz ($f_P$) und/oder das Tastverhältnis einstellt, um die Intensität der direkten inneren Erwärmung den aktuellen Bedingungen ohne Verzug anzupassen

10. Vorrichtung nach einem der Ansprüche 3 bis 9, dadurch gekennzeichnet, dass die Steuerschaltung (CC) sowohl während der Stromspitzen ($\hat{I}_L$, $-\hat{I}_L$) die Batteriespannung ($+U_B$) auswertet als auch über einen Temperaturfühler (TS) das Erwärmen überwacht, um das Reaktivieren zu beenden bzw. ein Reaktivieren einer betriebsfähigen Batterie zu verhindern.

FIG. 1

FIG. 2

FIG. 6

FIG. 3

FIG. 4

FIG. 5